(19) Europäisches Patentamt
European Patent Office
Office européen des brevets

(11) EP 4 545 323 A1

(12) EUROPEAN PATENT APPLICATION

(43) Date of publication:
30.04.2025 Bulletin 2025/18

(21) Application number: 24208933.2

(22) Date of filing: 25.10.2024

(51) International Patent Classification (IPC):
B60H 1/00 (2006.01)        B60H 1/32 (2006.01)

(52) Cooperative Patent Classification (CPC):
B60H 1/0073; B60H 1/00978; B60H 2001/3241;
B60H 2001/3255; B60H 2001/3261;
B60H 2001/3272

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 26.10.2023 GB 202316402

(71) Applicant: McLaren Automotive Limited
Woking, Surrey GU21 4YH (GB)

(72) Inventors:
• Bonnet, Cédric Christian Bernard
Woking, GU21 4YH (GB)
• Wilson, Jonathan Trevor
Woking, GU21 4YH (GB)

(74) Representative: Slingsby Partners LLP
1 Kingsway
London WC2B 6AN (GB)

(54) **AIR CONDITIONING CONTROL**

(57) Method for controlling an air conditioning system (10) of a vehicle (1), the air conditioning system (10) comprising a blower unit (12), a duct (14), an evaporator (17), a first heater (23) and a first discharge temperature sensor (25), the evaporator (17) and the first heater (23) being located in the duct (14), the blower unit (12) being configured to generate an airflow along the duct (14) and to generate the airflow at a variable blower speed, the first discharge temperature sensor (25) being configured to output a first discharge temperature sensed from the airflow in the duct (14) located after the evaporator (17) and the first heater (23), the method comprising calculating a mass flow rate based on the blower speed of the blower unit (12), calculating a first heating level of the air conditioning system (10) based on at least one first heater parameter associated with the first heater (23), and calculating an estimated evaporator operating temperature of the evaporator (17) based on the first discharge temperature, the first heating level, and the mass flow rate.

FIG. 1

EP 4 545 323 A1

**Description**

This invention relates to a method for controlling an air conditioning system of a vehicle and an air conditioning system of a vehicle. The invention also relates to a method for calculating parameters associated with an air conditioning system.

Air conditioning systems for vehicles generally comprise an evaporator. The purpose of the evaporator is to condition an airflow moving through the evaporator. The conditioning of the air may involve changing the humidity level of the airflow and/or cooling the airflow. For instance, the evaporator may lower the humidity level of the airflow and cool it at the same time. A compressor is generally used to drive the evaporator to a selected operating temperature. The operating temperature being chosen to condition the air in the desired manner and is variable depending on the current needs of the air conditioning system.

It is important that the temperature of the evaporator be controlled correctly. This is so that the air conditioning system operates correctly but also so that the evaporator is not driven by the compressor to an incorrect temperature which causes damage to the evaporator. Generally, a temperature sensor is used to monitor the evaporator to provide feedback to the control of the compressor and to also monitor for a failure of the evaporator, for instance due to freezing of the evaporator. The evaporator temperature sensor may be attached to part of the evaporator, for instance to fins of the evaporator which condition the air moving past the fins, or located very close to the evaporator so as to measure the temperature conditions in the vicinity of the evaporator.

A problem with using a temperature sensor in this situation is that if the temperature sensor fails then the compressor may be disabled. This can lead to a loss of cabin cooling in the vehicle as well as the loss of air dehumidification. The latter of which can cause windscreen misting. It would therefore be desirable for there to be an improved method of controlling an evaporator in an air conditioning system.

According to a first aspect of the present invention there is provided a method for controlling an air conditioning system of a vehicle, the air conditioning system comprising a blower unit, a duct, an evaporator, a first heater and a first discharge temperature sensor, the evaporator and the first heater being located in the duct, the blower unit being configured to generate an airflow along the duct and to generate the airflow at a variable blower speed, the first discharge temperature sensor being configured to output a first discharge temperature sensed from the airflow in the duct located after the evaporator and first heater, the method comprising: calculating a mass flow rate based on the blower speed of the blower unit; calculating a first heating level of the air conditioning system based on at least one first heater parameter associated with the first heater; and calculating an estimated evaporator operating temperature of the evaporator based on the first discharge temperature, the first heating level, and the mass flow rate.

The airflow may have a specific heat capacity and the method may comprise calculating the estimated evaporator operating temperature based on the specific heat capacity.

The air conditioning system may comprise a compressor, the compressor may be connected to the evaporator to drive the evaporator towards a target evaporator operating temperature. The method may comprise controlling the compressor to drive the evaporator towards the target evaporator operating temperature based on the estimated evaporator operating temperature. The air conditioning system may comprise an evaporator temperature sensor configured to output an evaporator operating temperature, and the method may comprise comparing the difference between the evaporator operating temperature and the estimated evaporator operating temperature to an fault threshold; and determining a fault with the evaporator temperature sensor if the difference is above the fault threshold. The method may comprise controlling the compressor to drive the evaporator towards the target evaporator operating temperature based on the evaporator operating temperature whilst the difference is below the fault threshold; and controlling the compressor to drive the evaporator towards the target evaporator operating temperature based on the estimated evaporator operating temperature whilst the difference is above the fault threshold.

Calculating the mass flow rate based on the blower speed may comprise: converting the blower speed to a blower volumetric flow; and calculating the mass flow rate based on the blower volumetric flow and an air density for the airflow. The method may comprise calculating the air density for the airflow based on the first discharge temperature. The air conditioning system may comprise a distribution system, the distribution system may comprise at least one distribution flap for controlling the airflow through the air conditioning system, and the method may comprise calculating the mass flow rate based on configuration of the distribution flap(s).

The at least one first heater parameter may be a first heater power level. The air conditioning unit may comprise a housing, the duct may form part of the housing and the housing may have a heat storage level, and an ambient air temperature sensor may be configured to output an ambient air temperature, and calculating a first heating level may comprise: calculating the housing heat storage level based on the mass flow rate and the ambient air temperature; calculating an estimated first heater power level based on the first heater power level and the housing heat storage level; and calculating the first heating level based on the estimated first heater power level. Calculating the housing heat storage level may comprise calculating the housing heat storage level using the mass flow rate and the ambient air temperature as inputs to a heat transfer model of the housing. Calculating the estimated first heater power level may comprise summing the estimated first heater power level and the housing heat storage level. Calculating a first heating level may comprise: calculating a first effective heater power level based on the estimated first heater power level and the mass flow rate; and using the first effective heater power level as the first heating level. Calculating the first effective heater power level may comprise applying a low pass filter with a variable averaging period to the estimated first heater power level, the variable averaging period may be set in dependence on the mass flow rate. The variable averaging period may be set in dependence on a mapping table of mass flow rate to averaging period.

The air conditioning system may comprise an air mix temperature flap, the air mix temperature flap may be configured to move between an open position and a closed position and in the open position the airflow may be able to pass through the first heater and in the closed position the airflow may be unable to pass through the first heater so that the air mix temperature flap position controls heating of the airflow, and the at least one first heating parameter may be the air mix temperature flap position, and the method may comprise: calculating the first heating level based on the air mix temperature flap position.

The air conditioning system may comprise a second heater, the duct may diverge into a first channel and a second channel after the evaporator, the first heater is located in the first channel and the second heater is located in the second channel, the air conditioning system further comprises a second discharge temperature sensor, the second discharge temperature sensor being configured to output a second discharge temperature sensed from the airflow in the second channel after the evaporator and second heater, the first discharge temperature sensor being configured to output the first discharge temperature sensed from the airflow in the first channel after the evaporator and first heater, and the method may comprise: calculating a second heating level of the air conditioning system based on at least one second heater parameter associated with the second heater; and calculating the estimated evaporator operating temperature based on the first discharge temperature, the first heating level, the second discharge temperature, the second heating level, and the mass flow rate. The method may comprise calculating the air density for the airflow based on the second discharge temperature. The method may comprise calculating the air density for the airflow based on an average of the first discharge temperature and the second discharge temperature. The at least one second heater parameter may be a second heater power level.

The air conditioning unit may comprise a housing, the duct may form part of the housing and the housing may have a heat storage level, and an ambient air temperature sensor may be configured to output an ambient air temperature, and calculating a second heating level may comprise: calculating the housing heat storage level based on the mass flow rate and the ambient air temperature; calculating an estimated second heater power level based on the second heater power level and the housing heat storage level; and calculating the second heating level based on the estimated second heater power level. Calculating the estimated second heater power level may comprise summing the estimated second heater power level and the housing heat storage level. Calculating a second heating level may comprise: calculating a second effective heater power level based on the estimated second heater power level and the mass flow rate; and using the second effective heater power level as the second heating level. Calculating the second effective heater power level may comprise applying a low pass filter with a variable averaging period to the estimated second heater power level, the variable averaging period may be set in dependence on the mass flow rate. The variable averaging period may be set in dependence on a mapping table of mass flow rate to averaging period. Calculating the estimated evaporator operating temperature may comprise: calculating a first derived evaporator operating temperature based on the first discharge temperature, the first heating level, and the mass flow rate; calculating a second derived evaporator operating temperature based on the second discharge temperature, the second heating level, and the mass flow rate; and calculating the estimated evaporator operating temperature by taking an average of the first derived evaporator operating temperature and the second derived evaporator operating temperature. Calculating a first derived evaporator operating temperature may be based on half the mass flow rate; and calculating a second derived evaporator operating temperature may be based on half the mass flow rate.

The method may be performed by an air conditioning controller.

According to a second aspect of the present invention there is provided an air conditioning system for a vehicle, the air conditioning system comprising: a duct; a blower unit being configured to generate an airflow along the duct and to generate the airflow at a variable blower speed; an evaporator located in the duct; a first heater located in the duct; a first discharge temperature sensor being configured to output a first discharge temperature sensed from the airflow in the duct located after the evaporator and first heater; and an air conditioning controller configured to: calculate a mass flow rate based on the blower speed of the blower unit; calculate a first heating level of the air conditioning system based on at least one first heater parameter associated with the first heater; and estimate the evaporator temperature based on the first discharge temperature, the first heating level, and the mass flow rate.

The present invention will now be described by way of example with reference to the accompanying drawings. In the drawings:

     Figure 1 shows a vehicle comprising an air conditioning system.
Figure 2 shows a schematic diagram of a first type of air conditioning system.
Figure 3 shows a schematic diagram of a second type of air conditioning system.
Figure 4 shows a method of calculating an estimated evaporator operating temperature.

The following description is presented to enable any person skilled in the art to make and use the invention, and is provided in the context of a particular application. Various modifications to the disclosed embodiments will be readily apparent to those skilled in the art.

The general principles defined herein may be applied to other embodiments and applications without departing from the spirit and scope of the present invention. Thus, the present invention is not intended to be limited to the embodiments shown, but is to be accorded the widest scope consistent with the principles and features disclosed herein.

The present invention relates to a method for controlling an air conditioning system of a vehicle. The air conditioning system comprises a blower unit, a duct, an evaporator, a first heater and a first discharge temperature sensor, the evaporator and the first heater being located in the duct, the blower unit being configured to generate an airflow along the duct and to generate the airflow at a variable blower speed, the first discharge temperature sensor being configured to output a first discharge temperature sensed from the airflow in the duct located after the evaporator and first heater. The method comprises calculating a mass flow rate based on the blower speed of the blower unit and calculating a first heating level of the air conditioning system based on at least one first heater parameter associated with the first heater. The method further comprises calculating an estimated evaporator operating temperature of the evaporator based on the first discharge temperature, the first heating level, and the mass flow rate.

The present invention also relates to an air conditioning system for a vehicle. The air conditioning system comprises a duct, a blower unit being configured to generate an airflow along the duct and to generate the airflow at a variable blower speed, an evaporator located in the duct, a first heater located in the duct, and a first discharge temperature sensor being configured to output a first discharge temperature sensed from the airflow in the duct located after the evaporator and first heater; and an air conditioning controller. The air conditioning controller is configured to: calculate a mass flow rate based on the blower speed of the blower unit; calculate a first heating level of the air conditioning system based on at least one first heater parameter associated with the first heater; and estimate the evaporator temperature based on the first discharge temperature, the first heating level, and the mass flow rate.

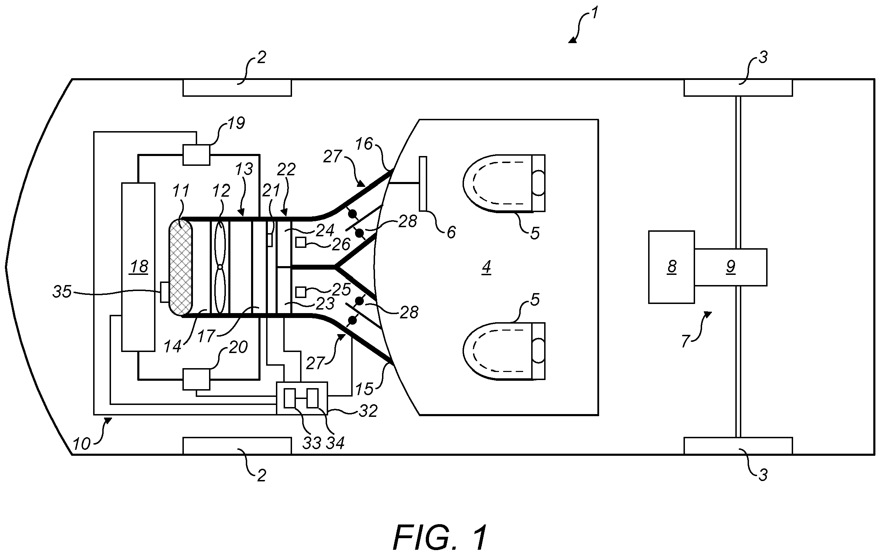

Figure 1 shows a vehicle 1. The vehicle 1 may be an automobile. The vehicle 1 may be a car. The vehicle 1 comprises front wheels 2 and rear wheels 3. The front of the vehicle is defined with reference to the primary motion direction of the vehicle 1. The front of the vehicle 1 points in the primary motion direction of the vehicle. Generally, a vehicle has a primary motion direction that is the forward direction. The vehicle 1 comprises an occupant compartment 4. The occupant compartment 4 may comprises one or more seats 5 for occupants of the vehicle to sit in. Whilst two seats 5 are shown in figure 1 it will be appreciated that more may be included in the vehicle 1. The occupant compartment 4 may accommodate a driver. The occupant compartment may accommodate one or more passengers. The vehicle 1 may comprise controls 6 located within the occupant compartment 4 to enable an occupant to control the motion of the vehicle. The occupant compartment 4 may also be known as a passenger compartment.

The vehicle comprises a powertrain 7. The powertrain may comprise an internal combustion engine 8. The powertrain 7 may comprise one or more electrical machines that are capable of providing motive power to the drive wheels of the vehicle. The powertrain shown in figure 1 comprises a gearbox and differential shown generally at 9. At least some of the wheels may be coupled to the powertrain to receive motive power from the powertrain 7 and thus are drive wheels of the vehicle. As shown in figure 1, the powertrain 7 is connected to the rear wheels 3. It will be appreciated that the powertrain 7 could equally be connected to the front wheels 2 and/or both front and rear wheels 2, 3 of the vehicle 1.

As shown in figure 1, the powertrain 7 may be located in the middle or towards the rear of the vehicle. The powertrain 7 may be located behind the occupant compartment 4. The powertrain 7 may be located between the front and rear axles of the wheels 2, 3. The engine 8 may be located between the front and rear axles of the wheels 2, 3. The vehicle 1 may be a mid-engine vehicle. The vehicle may be a rear-engine vehicle. Other drive units which do not form part of powertrain 7 may be present in the vehicle 1. For instance, the vehicle may comprise one or more electric motors which drive wheels of the vehicle 1 separately from the powertrain 7.

The vehicle 1 comprises an air conditioning system 10. The air conditioning system 10 may be known as a heating, ventilation and air conditioning (HVAC) system. The air conditioning system comprises an air inlet 11. The air inlet 11 permits air from outside of the vehicle 1 to flow into the air conditioning system 10. The air inlet 11 may have one or more openings for air to enter the air inlet. The air conditioning system may also recirculate and condition air inside the vehicle 1 depending on the settings of the air conditioning system.

The air conditioning system 10 comprises a blower unit 12. The blower unit 12 generates an airflow through the air conditioning system 10. The blower unit 12 may draw air into the air conditioning system 10 from the air inlet 11. The blower unit 12 may comprise one or more fans which draws air from an inlet of the blower unit 12 to an outlet of the blower unit 12. In this way the blower unit 12 can generate an airflow at the outlet of the blower unit 12. The blower speed of the blower unit 12 is controllable. The blower speed is controllable between a minimum blower speed and a maximum blower speed. The minimum blower speed may be zero. The blower speed may be defined as a percentage of the maximum blower speed. The blower speed may also be defined with reference to the rpm of the one or more fans present in the blower unit 12. Therefore, the blower unit 12 can generate this airflow at a variable blower speed.

The air conditioning system 10 comprises a housing which is shown generally at 13. The housing 13 has a level of heat storage associated with it. This means that when the air conditioning system 10 attempts to change the temperature of the air being output by the air conditioning system 10 there may be a lag in that change of temperature due to the housing 13 needing to draw in or expel heat from itself to match the change in temperature of the air being output. The housing 13 therefore has a heat storage level. The heat storage level being the amount of heat energy that is stored by the housing 13 for a given temperature level of the housing.

The air conditioning system comprises a duct 14. The blower unit 10 is configured to generate an airflow along the duct 14. The duct 14 may originate at the air inlet 11. The duct 14 may end at positions with the occupant compartment 4. In this way, the duct 14, and thus the air conditioning system, can supply airflow to the occupant compartment 4.

As shown in figure 1, the duct 14 may diverge into two or more channels. Figure 1 shows a first channel 15 and a second channel 16. The first channel 15 may be a left hand channel and the second channel 16 may be a right hand channel. The splitting into two or more channels allows the air conditioning system to supply differently conditioned airflows to different parts of the occupant cabin 4.

The air conditioning system also comprises an evaporator 17, a condenser 18, a compressor 19 and an expansion valve 20. These components are connected together by refrigerant ducts. The refrigerant in the air conditioning system 10 runs from the compressor 19 to the condenser 18 then to the expansion valve 20 and then to the evaporator 17 after which the refrigerant returns to the compressor 19. The rate at which the compressor 19 works drives the evaporator 17 to a particular operating temperature. If the rate at which the compressor 19 works is fixed then the evaporator 17 will reach a steady operating temperature assuming other conditions that affect the evaporator 17 are fixed. For instance, the operating temperature of the evaporator 17 may vary for a given compressor rate depending on the air flow rate through the evaporator 17 and/or the air inlet flow temperature. Thus, the compressor 19 acts to control the operating temperature of the evaporator 17.

The condenser 19 acts on the refrigerant to condense the refrigerant from being a gas back into being a fluid. In this way, the refrigerant is cooled. The expansion valve 20 permits expansion of the fluid which permits further cooling of the fluid. The evaporator 17 then permits the fluid to evaporate into a gas. The fluid runs through operating surfaces of the evaporator 17 which causes those surfaces to provide a conditioning effect on the airflow. The conditioning effect may be a one or more of cooling and dehumidifying the airflow. Thus the airflow that passes through the evaporator has its temperature and/or humidity level adjusted.

The air conditioning system 10 may comprise an evaporator temperature sensor 21. The evaporator temperature sensor 21 is positioned so that it can sense the operating temperature of the evaporator 17. The evaporator temperature sensor 21 is configured to output an evaporator operating temperature. The evaporator operating temperature is an evaporator operating temperature reading. The evaporator temperature sensor 21 may attached to the evaporator 17. The evaporator temperature sensor 21 may be attached to an operating surface of the evaporator 17. The evaporator temperature sensor 21 may be positioned close to, but not touching, the evaporator 17. In this way, the evaporator temperature sensor 21 may sense the operating temperature from the airflow that has passed through the evaporator 17.

The air conditioning system 10 comprises a heater unit 22. The heater unit 22 may comprise a first heater 23. The heater unit 22 may comprise a second heater 24. The heater unit 22 may be formed physically as one component but that can vary the heat of the first heater and second heater independently. The heater unit 22 may be physically formed of separate heating components that form the first heater 23 and separately form the second heater 24. It will be appreciated that the heater unit 22 may comprise more than two heaters or may only comprise one heater depending on the areas of the occupant compartment 4 that require air conditioning. The first heater 23 may be known as a left heater. The second heater 24 may be known as a right heater.

The heater(s) 23, 24 may be electrically powered. The heaters may therefore accept an electrical input and generate heat in response to that electrical input. The heater(s) 23, 24 may be controlled to a given operating temperature. The heater(s) 23, 24 may be controlled to a heater power level. The heater power level can vary over time as the heating requirements in the occupant cabin 4 alter. The heater(s) may be positive temperature coefficient (PTC) heaters.

Alternatively, the heater(s) may be powered by an alternative heat source. This heat source may be a coolant fluid from the powertrain 8. In this situation, the heater(s) 23, 24 may reach a substantially constant temperature, and thus substantially constant heater power level, after the powertrain has warmed up to normal operating temperature.

When there are two or more heaters, the first heater 23 is located in the first channel 15. The second heater 24 is located in the second channel 16.

The air conditioning system 10 comprises a discharge temperature sensor for each heater 23, 24 that is present in the system 10.

As shown in figure 1, the air conditioning system 10 comprises a first discharge temperature sensor 25. The first discharge temperature sensor 25 senses the temperature of the airflow discharged from the first heater 23. The first discharge temperature sensor 25 outputs a first discharge temperature. The first discharge temperature is the temperature of the airflow in the duct located after the evaporator 17 and the first heater 23. The first discharge temperature is the temperature reading taken from airflow in that region of the duct.

As also shown in figure 1, the air conditioning system 10 comprises a second discharge temperature sensor 26. The second discharge temperature sensor 26 senses the temperature of the airflow discharged from the second heater 24. The first discharge temperature sensor 26 outputs a second discharge temperature. The second discharge temperature is the temperature of the airflow in the duct located after the evaporator 17 and the second heater 23. The first discharge temperature is the temperature reading taken from airflow in that region of the duct.

Where there are two or more heaters 22, 23, the first discharge temperature sensor 25 is located in the first channel 15 and the second discharge temperature sensor 26 is located in the second channel 16.

The air conditioning system 1 comprises a distribution system 27. The distribution system comprises at least one distribution flap 28. The distribution flap(s) 28 control the airflow through the air conditioning system 10. The distribution flap(s) 28 may control how the airflow enters the occupant cabin 4. For instance, there may be distribution flaps 28 that:

- selectively permit airflow into a high area in the occupant cabin 4, such as towards where an occupant's face would generally be positioned.
- selectively permit airflow into a low area in the occupant cabin 4, such as a foot well.
- selectively permit airflow into a diffused area in the middle of the occupant cabin 4.
- selectively permit airflow towards a windscreen of the vehicle 1.

The distribution system 27 may have sets of distribution flaps 28 for each channel 15, 16 of the duct 14. Each set of distribution flaps 28 may operate to selectively permit airflow to a particular region of the occupant cabin 4.

The distribution system 27 may comprise at least one distribution flap which permits the recirculation of air from the occupant cabin 4 back to the blower unit 12. These distribution flap(s) may also shut off the flow of air from the air inlet to the blower unit 12. This at least one distribution flap may be known as one or more recirculation flaps.

The position of the various distribution flaps 28 alters the back pressure present in the air conditioning system 10 on the airflow emanating from the blower unit 12. This back pressure has an effect on the mass flow rate of the airflow generated by the blower unit 12.

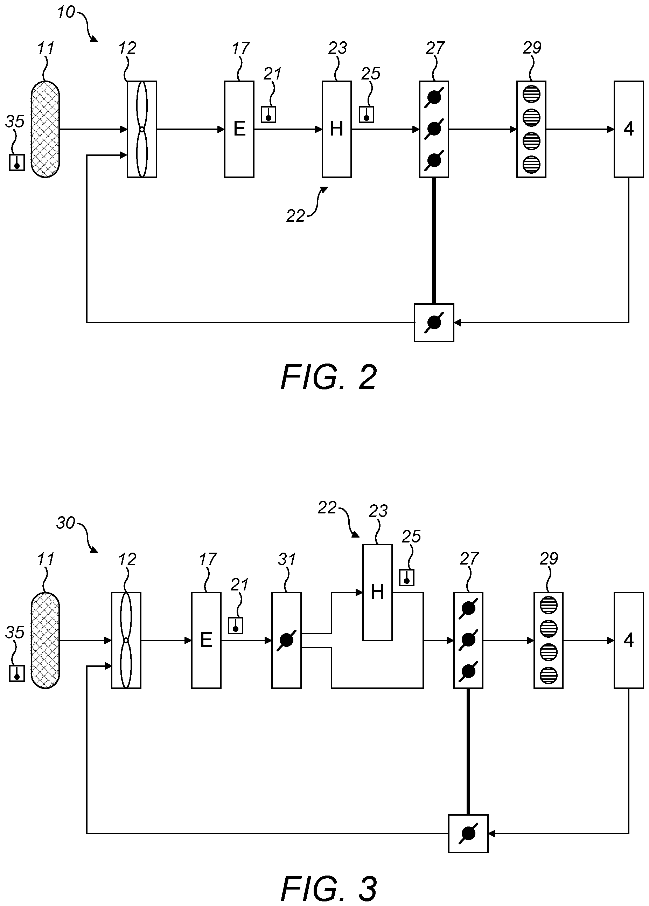

Figure 2 shows a schematic diagram of a first air conditioning system 10. This system is a schematic diagram of the air conditioning system 10 shown in figure 1. Figure 2 shows an air inlet 11. The direction of the arrows shows the path of an airflow through the air conditioning system 10. The blower 12 can draw air from the air inlet and/or the occupant cabin 4 as controlled by the distribution system 27. The airflow from the blower unit 12 passes through the evaporator 17 to cool and/or alter the humidity of the airflow. The evaporator temperature sensor 21 outputs the evaporator operating temperature. The airflow from the evaporator 17 passes through the heater unit 22. In figure 2, only a first heater 23 is shown to simplify the figure. However, it will be appreciated that more than one heater may be present as shown in figure 1. The discharge temperature sensor 25 outputs a discharge temperature of the airflow after the airflow has passed through the heater 23. The airflow is then directed into the occupant cabin 4 by the distribution system 27 via air vents 29. The heater(s) in this system may be electrically powered heater(s).

Figure 3 shows a schematic diagram of a second air conditioning system 30. This system shows additional components that are not shown in the air conditioning system 10 of figure 1. Figure 3 shows an air inlet 11. The direction of the arrows shows the path of an airflow through the air conditioning system 30. The blower 12 can draw air from the air inlet and/or the occupant cabin 4 as controlled by the distribution system 27. The airflow from the blower unit 12 passes through the evaporator 17 to cool and/or alter the humidity of the airflow. The evaporator temperature sensor 21 outputs the evaporator operating temperature.

The air conditioning system 30 comprises an air mix temperature flap 31. The air mix temperature flap 31 controls the flow of air through the heater unit 22. The air mix temperature flap 31 permits a variable amount of airflow through the heater unit 22. This permits a selectable amount of heating to be given to the airflow. The air mix temperature flap 31 is configured to move between an open position and a closed position. In the open position the airflow is able to pass through the heater unit 23 and in the closed position the airflow is unable to pass through the first heater 23. Therefore, the position of the air mix temperature flap 31 between the open and closed positions controls the heating of the airflow. In the case that there are more than one heater units, air conditioning system 30 may comprise more than one air mix temperature flap 30. In other words, the air conditioning system 30 may comprise a first air mix temperature flap for the first heater 23 and a second air mix temperature flap for the second heater 24.

In figure 3, only a first heater 23 is shown to simplify the figure. However, it will be appreciated that more than one heater may be present as shown in figure 1. The discharge temperature sensor 25 outputs a discharge temperature of the airflow after the airflow has passed through and/or around the heater 23. The airflow is then directed into the occupant cabin 4 by the distribution system 27 via air vents 29. The heater(s) in this system may be powered by the coolant from the powertrain 8.

It will be appreciated that the air conditioning system of figure 3 could be combined with that of figure 2 to provide further control to the heating of the airflow.

The vehicle 1 comprises one or more control units 32 configured to control vehicle functions. The control unit 32 may be an air conditioning controller 32. The air conditioning controller 32 is connected to the various air conditioning components. In this was the air conditioning controller 32 is configured to control the air conditioning system 10. The control unit 32, and so the air conditioning controller 32, may comprise a processor 33 and a memory 34. The memory 34 may be non-volatile memory. The control unit 32 may be formed as a more general vehicle control unit. This vehicle control unit may control various vehicle functions. Those vehicle functions may be the ones in the vicinity of the control unit. The control unit 32 may comprise more than one processor and more than one memory. The memory stores a set of program instructions that are executable by the processor, and reference data such as look-up tables that can be referenced by the processor in response to those instructions. The processor may be configured to operate in accordance with a computer program stored in non-transitory form on a machine-readable storage medium. The computer program may store instructions for causing the calculation of parameters associated with the air conditioning system and the control of the air conditioning system as described herein.

The vehicle 1 may comprise an ambient air temperature sensor 35. The ambient air temperature sensor 35 may be positioned near to the air inlet 11. Alternatively, the ambient air temperature sensor 35 may be placed elsewhere on the vehicle 1 where it can give an accurate reading of the ambient air temperature. The ambient air temperature sensor 35 is configured to output an ambient air temperature. The ambient air temperature is the sensed normal air temperature around the vehicle 1.

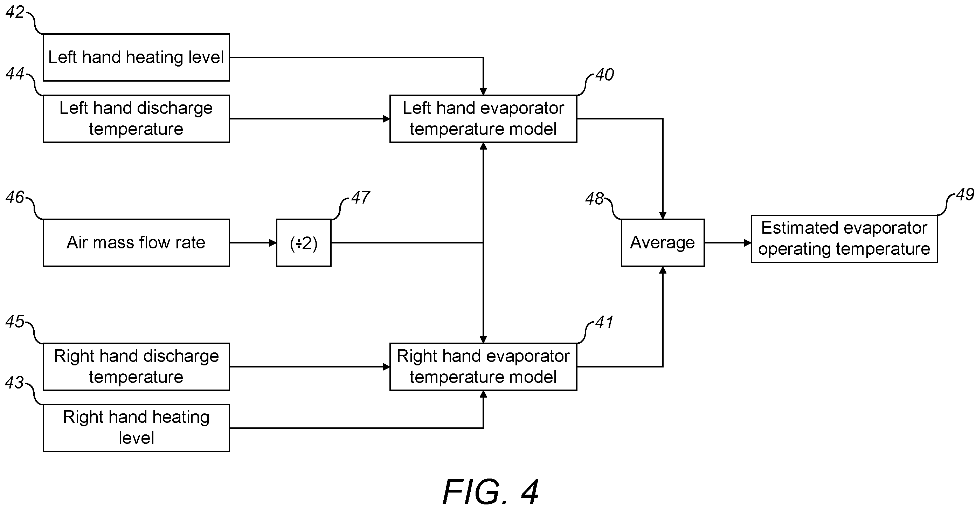

The methods by which parameters associated with the air conditioning system are calculated and how the air conditioning system is controlled will be described in more detail with reference to figure 4.

Figure 4 shows a flow diagram showing a method of estimating the evaporator operating temperature. The estimation of the evaporator temperature is done without reference to a temperature sensor that measures the temperature of the evaporator. This means that the estimation takes place without using the evaporator temperature sensor 21. This is advantageous because it means that the air conditioning system 10 may be configured without an evaporator temperature sensor 21 being present. This reduces the cost associated with the air conditioning system 10 as the sensor is no longer required. It can also improve the reliability of the air conditioning system 10 because there is one fewer component that could go wrong. If the evaporator temperature sensor 21 is present then the described methods concerning estimating the evaporator temperature can be used in checking whether there is a fault with the evaporator temperature sensor 21. In this case, the estimate of the evaporator temperature can be used to check whether the evaporator temperature sensor 21 is operating within bounds. If the evaporator temperature sensor 21 is outputting a temperature that is sufficiently different to that of the estimate then it can be assumed that there is an error with the temperature sensor 21. In this case, a fault can be triggered with the evaporator temperature sensor 21 which might flag that it needs to be replaced. Alternatively, or as well as, the air conditioning system 10 may be able to continue to function without the occupants of the vehicle noticing because the air conditioning system 10 can make use of the estimated evaporator temperature in place of the readings from the evaporator temperature sensor 21.

The estimation of the evaporator temperature makes use of a model of the evaporator temperature as shown at 40 and 41. The estimation will be described in relation to the general configurations shown in figures 1 to 3 where there are two heaters present: one for the left hand side and one for the right hand side of the vehicle 1. It will be understood that the estimation would equally work with only one heater present in which case the described averaging and division of certain elements will not be present. It will also be understood that the air conditioning system 10 could comprise more than two heaters. In which case, there would be averaging and division over the number of heaters present in the system.

The model of the evaporation temperature is based on the following equation:

$$(1) \quad Q = mc_p(T_2 - T_1)$$

where Q is the heater power, m is the air mass flow rate of the blower unit 12 that is directed through a particular heater, $c_p$ is the heat capacity of the air in the airflow, $T_1$ is the evaporator temperature and $T_2$ is the discharge temperature associated with the respective heater. Equation 1 can be rearranged to give the evaporator temperature $T1$:

$$(2) \quad T_1 = T_2 - \frac{Q}{mc_p}$$

The heater power Q may be characterized more generally as the heating level provided by a heater. The heating level for the left and right hand heaters are shown at 42, 43. The left and right hand discharge temperatures are shown at 44 and 45. The air mass flow rate is shown at 46. As there are two heaters present in this model, it is assumed that half of the airflow is directed to the left hand heater and half of the airflow is directed to the right hand heater. Hence, the air mass flow rate 46 being divided by two in step 47 before being input into the left hand and right hand evaporator models 40, 41. The output of each model is an estimate of the evaporator temperature for that side of the air conditioning system 10. As the evaporator treats the airflow to both sides of the air conditioning system 10 prior to the airflow being divided and flowing through the two heaters 22, 23, each side of the air conditioning system can be used to estimate the evaporator temperature. Therefore, to provide a better estimate of the evaporator temperature the average can be taken of the estimate of the evaporator temperature output by the left hand evaporator temperature model and the right hand evaporator temperature model. This is as shown at 48.

The output of this average of the left hand estimated evaporator temperature and the right hand evaporator temperature forms the estimated evaporator operating temperature as shown at 49. It will be appreciated that although reference is made to left hand and right hand heating, temperatures and evaporator models these could equally be referred to as first and second heating, temperatures and evaporator models.

Air mass flow rate 46 is calculated based on the blower speed of the blower unit 12. A blower volumetric flow may be calculated by using a map of blower speed to volumetric flow. The map may also include the configuration of the distribution flaps 28 in the distribution system 27. This is because the distribution system 27 can provide a back pressure on to the airflow moving through the air conditioning system. This can therefore affect the flow of air. For instance, if most of the flaps are closed then there will be a high back pressure which will mean the mass flow rate of the airflow will be lower. However, if most of the flaps are open then there will be a lower back pressure which will mean the mass flow rate of the airflow will be higher. In addition, the recirculation flap of the distribution system can also change the mass flow rate as there is higher resistance when drawing in fresh air over using air from the occupant cabin. Therefore, the percentage by which the recirculation flap is open may also adjust the blower volumetric flow.

The map may be created by running the blower at a range of speeds and measuring the volumetric flow rate for those speeds. The map may also be created by running the blower at a range of speeds with the distribution flaps 28 in a variety of positions. This data can be then used to form a plot of blower speed against volumetric flow rate.

To obtain the mass flow rate the volumetric flow rate is used together with the density of the airflow. The volumetric flow rate is multiplied by the air density of the airflow to give the mass flow rate 46. As the density of the airflow varies based on the temperature of the airflow, to provide a better estimate of the mass flow rate, the temperature of the airflow may be used to estimate the density of the air in the airflow. The temperature(s) measured by the discharge temperature sensor(s) 25, 26 may be used for this purpose. The temperatures measured by the discharge temperature sensors may be summed together and then divided by the number of discharge temperature sensors to give the average discharge temperature. In this way, the first and second discharge temperatures may be averaged to give the average discharge temperature.

The density of the air in the airflow may be calculated using the following equation:

$$(3) \qquad p = \rho R T$$

where p is the pressure of the air, $\rho$ is the density of the air, R is the specific gas constant for air and T is the temperature of the air. Equation 3 can be rearranged to give the density of the air $\rho$:

$$(4) \qquad \rho = \frac{p}{RT}$$

The air pressure may be assumed to be atmospheric pressure. E.g. around 101300 Pa. The specific gas constant for air may be taken to be 287.05 J per Kg per K.

Therefore, the density of the airflow is calculated based on the discharge temperature(s). The density of the airflow is calculated by dividing the pressure of the airflow by the specific gas constant for air and the temperature of the airflow.

Once the density of the airflow has been calculated then the density can be multiplied by the volumetric flow rate of the airflow to give the mass flow rate of the airflow.

The mass flow rate of the airflow may by calculated based on the configuration of the distribution flaps 28 in the distribution system 27. This is because the distribution system 27 can provide a back pressure on to the airflow moving through the air conditioning system. This can therefore affect the flow of air. For instance, if most of the flaps are closed then there will be a high back pressure which will mean the mass flow rate of the airflow will be lower. However, if most of the flaps are open then there will be a lower back pressure which will mean the mass flow rate of the airflow will be higher. In addition, the recirculation flap of the distribution system can also change the mass flow rate as there is higher resistance when drawing in fresh air over using air from the occupant cabin. Therefore, the percentage by which the recirculation flap is open may also adjust the mass flow rate of the airflow.

The heating level of the air conditioning system may be based on at least one heater parameter associated with the heater. In the case that there are left and right hand heaters as shown in Figure 4, then a first heating level, associated with the left hand heater, and a second heating level, associated with the right hand heater, may be calculated. This calculation is based on at least one first heater parameter associated with the first heater and at least one second heater parameter associated with the second heater.

As described herein, the level of power output by each heater may be variable. This variability may come from a respective heater being an electric heater. In this case the heater parameter in each case can be a heater power level. Therefore, there can be a first heater power level associated with the first heater and a second heater power level associated with the second heater. The heater power level may be the amount of electrical energy that is being supplied to the heater at a given time. I.e. the amount of power being supplied to the heater. Therefore, the heater power may be a measured heater power where the measurement is the amount of power being drawn by the heater at a given time.

The heater power level may be used as the heating level. The heater power level may be used directly as the input of Q into the evaporator temperature models 40, 41. However, better accuracy of the evaporator temperature can be achieved if the thermal mass of the air conditioning system is taken into account. In this case the heater power level of each heater can be modified to take into account the heat transfer between the airflow and the air conditioning casing. In addition, the thermal inertia of the heater itself can also be taken into account.

An estimated heater power level can be calculated based on the level of heat storage of the housing. A heat transfer model of the housing can be used to calculate the housing heat storage level. The model may be a two dimensional map giving an amount of power gained or lost through the housing. The model depends on the ambient temperature of the air and the blower mass flow rate. The model may be constructed by taking temperature readings downstream of the air conditioning system for a range of ambient temperatures and blower speeds. This can then be plotted to provide a continuous range of housing heat storage levels for a given ambient temperature and blower speed. Therefore, the heat storage level of the housing of the air conditioning system can be calculated based on the mass flow rate and the ambient air temperature. The heat storage level may be a positive or negative value depending on the ambient temperature in particular but also the blower mass flow rate.#

An estimated heater power level can be calculate based on the heater power level and the housing heat storage level. The heater power level can be summed with the housing heat storage level to give the estimated heater power level. So in the case of two heaters, the estimated first heater power level can be calculated based on the first heater power level and the housing heat storage level and the estimated second heater power level can be calculated based on the second heater power level and the housing heat storage level.

The estimated heater power level can be used as the heating level. The estimated heater power level may be used as the input of Q into the evaporator temperature models 40, 41. However, as discussed herein a better accuracy of the evaporator temperature can be achieved if the thermal inertia of the heater(s) are taken into account.

An effective heater power level can be calculated based on the mass flow rate and the estimated heater power level. The calculation is to smooth changes in the measured heater power level of the heater. This then takes into account that the heater is a thermal mass and so takes time to actually change its temperature. The mass flow rate is used because at low flow rates the heater takes longer to heat up or dissipate the stored heat into the airflow but at high flow rates the heater will more quickly have an impact on the outlet temperature.

The changes in the measured heater power level are smoothed using a low pass filter. The low pass filter takes as its input the estimated heater power. In the case of two heaters there are two low pass filters: a first low pass filter and a second low pass filter. Each filter having an its input a respective first or second estimated heater power.

The low pass filter has a variable averaging period. The averaging period is controlled in dependence on the mass flow rate of the blower 12. The averaging period may be set based on a map of blower flow rate to averaging period. The averaging period may be smaller at higher flow rates and larger at lower flow rates. This permits the effective heater power to be updated quicker for higher flow rates and slower for lower flow rates.

As an alternative to using a low pass filter, a model of the thermal mass of the heater may be used instead. A range of changes in heater power for a range of blower mass flow rates may be undertaken and the rate of change of output temperature may be measured. These measurements can be used to obtain a model of the range of change of temperature of the heater for a given mass flow rate.

The effective heater power level can be used as the heating level. The effective heater power level may be used as the input of Q into the evaporator temperature models 40, 41.

As discussed herein, the air conditioning system 10 may comprise an air mix temperature flap 31. This is especially advantageous in air conditioning systems 10 where the heater(s) are provided with heat from the powertrain 8 of the vehicle 1 or another substantially constant temperature medium. In these systems, the heater(s) may have a substantially constant operating temperature and so the variability in heating level is provided by the air mix temperature flap 31. In this case, one heating parameter is the air mix temperature flap position. There may be left and right airflows and so first and second air mix temperature flaps provided. In this case, one first heating parameter is the first air mix temperature flap position and one second heating parameter is the second air mix temperature flap position.

The first heating level may be calculated based on the air mix temperature flap position. A model may be used to map the flap position to the heating level on the airflow after the heater. A range of flap positions may be undertaken and the discharge temperature measured in each case. These measurements can then be used to generate a map of heating effect for a given flap position.

The use of a model of evaporator temperature as herein described has the advantages of permitting the air conditioning system to be controlled based on the estimated evaporator operating temperature rather than using a value obtained from a temperature sensor. In this way, the method of controlling the air conditioning system may comprise controlling the compressor 19 to drive the evaporator 17 towards the target evaporator operating temperature based on the estimated evaporator operating temperature. In this case a measured evaporator temperature is not used.

Another advantage may be that a fault with the evaporator temperature sensor 21 can be detected based on the estimated evaporator temperature. In this way, the method of controlling the air conditioning system may comprise comparing the difference between the evaporator operating temperature provided by the evaporator temperature sensor 21 and the estimated evaporator operating temperature to an fault threshold. This fault threshold may be a temperature difference above which a fault is determined to have taken place with the temperature sensor. The fault threshold may be 10, 15, 20, 25 or 30 degrees Celsius. The method may then determine a fault with the evaporator temperature sensor if the difference is above the fault threshold. The method may determine a fault with the evaporator temperature sensor if the difference is above the fault threshold for a predetermined time period. The time period may be 10, 20, 30, 40, 50 or 60 seconds.

When a fault is detected with the evaporator temperature sensor 21 then the air conditioning system may use the estimated evaporator operating temperature as an alternative whilst a fault remains with the evaporator temperature sensor 21.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features. In view of the foregoing description it will be evident to a person skilled in the art that various modifications may be made within the scope of the invention.

ANNEX TO THE DESCRIPTION

1. A method for controlling an air conditioning system of a vehicle, the air conditioning system comprising a blower unit, a duct, an evaporator, a first heater and a first discharge temperature sensor, the evaporator and the first heater being located in the duct, the blower unit being configured to generate an airflow along the duct and to generate the airflow at a variable blower speed, the first discharge temperature sensor being configured to output a first discharge temperature sensed from the airflow in the duct located after the evaporator and first heater, the method comprising:

   calculating a mass flow rate based on the blower speed of the blower unit;
   calculating a first heating level of the air conditioning system based on at least one first heater parameter associated with the first heater; and
   calculating an estimated evaporator operating temperature of the evaporator based on the first discharge temperature, the first heating level, and the mass flow rate.

2. A method according to 1, wherein the airflow has a specific heat capacity and the method comprises calculating the estimated evaporator operating temperature based on the specific heat capacity.

3. A method according to 1 or 2, wherein the air conditioning system comprises a compressor, the compressor being connected to the evaporator to drive the evaporator towards a target evaporator operating temperature.

4. A method according to 3, the method comprising controlling the compressor to drive the evaporator towards the target evaporator operating temperature based on the estimated evaporator operating temperature.

5. A method according to 3 or 4, wherein the air conditioning system comprises an evaporator temperature sensor configured to output an evaporator operating temperature, and the method comprises comparing the difference between the evaporator operating temperature and the estimated evaporator operating temperature to an fault threshold; and determining a fault with the evaporator temperature sensor if the difference is above the fault threshold.

6. A method according to 5, the method comprising controlling the compressor to drive the evaporator towards the target evaporator operating temperature based on the evaporator operating temperature whilst the difference is below the fault threshold; and controlling the compressor to drive the evaporator towards the target evaporator operating temperature based on the estimated evaporator operating temperature whilst the difference is above the fault threshold.

7. A method according to any of 1 to 6, wherein calculating the mass flow rate based on the blower speed comprises: converting the blower speed to a blower volumetric flow; and calculating the mass flow rate based on the blower volumetric flow and an air density for the airflow.

8. A method according to 7, the method comprising calculating the air density for the airflow based on the first discharge temperature.

9. A method according to 7 or 8, wherein the air conditioning system comprises a distribution system, the distribution system comprising at least one distribution flap for controlling the airflow through the air conditioning system, and the method comprises calculating the mass flow rate based on configuration of the distribution flap(s).

10. A method according to any of 1 to 9, wherein the at least one first heater parameter is a first heater power level.

11. A method according to 10, wherein the air conditioning unit comprises a housing, the duct forming part of the housing and the housing having a heat storage level, and an ambient air temperature sensor being configured to output an ambient air temperature, and calculating a first heating level comprises:

calculating the housing heat storage level based on the mass flow rate and the ambient air temperature;
calculating an estimated first heater power level based on the first heater power level and the housing heat storage level; and
calculating the first heating level based on the estimated first heater power level.

12. A method according to 11, wherein calculating the housing heat storage level comprises calculating the housing heat storage level using the mass flow rate and the ambient air temperature as inputs to a heat transfer model of the housing.

13. A method according to 11 or 12, wherein calculating the estimated first heater power level comprises summing the estimated first heater power level and the housing heat storage level.

14. A method according to any of 11 to 13, wherein calculating a first heating level comprises:

calculating a first effective heater power level based on the estimated first heater power level and the mass flow rate; and
using the first effective heater power level as the first heating level.

15. A method according to 14, wherein calculating the first effective heater power level comprises applying a low pass filter with a variable averaging period to the estimated first heater power level, the variable averaging period being set in dependence on the mass flow rate.

16. A method according to 15, wherein the variable averaging period is set in dependence on a mapping table of mass flow rate to averaging period.

17. A method according to any of 1 to 16, wherein the air conditioning system comprises an air mix temperature flap, the air mix temperature flap is configured to move between an open position and a closed position and in the open position the airflow is able to pass through the first heater and in the closed position the airflow is unable to pass through the first heater so that the air mix temperature flap position controls heating of the airflow, and the at least one first heating parameter is the air mix temperature flap position, and the method comprises: calculating the first heating level based on the air mix temperature flap position.

18. A method according to any of 1 to 17, wherein the air conditioning system comprises a second heater, the duct diverges into a first channel and a second channel after the evaporator, the first heater is located in the first channel and the second heater is located in the second channel, the air conditioning system further comprises a second discharge temperature sensor, the second discharge temperature sensor being configured to output a second discharge temperature sensed from the airflow in the second channel after the evaporator and second heater, the first discharge temperature sensor being configured to output the first discharge temperature sensed from the airflow in the first channel after the evaporator and first heater, and the method comprises:

calculating a second heating level of the air conditioning system based on at least one second heater parameter associated with the second heater; and

calculating the estimated evaporator operating temperature based on the first discharge temperature, the first heating level, the second discharge temperature, the second heating level, and the mass flow rate.

19. A method according to 18 as dependent on 7, the method comprising calculating the air density for the airflow based on the second discharge temperature.

20. A method according to 18 or 19 as dependent on 7, the method comprising calculating the air density for the airflow based on an average of the first discharge temperature and the second discharge temperature.

21. A method according to any of 18 to 20, wherein the at least one second heater parameter is a second heater power level.

22. A method according to any of 18 to 21 wherein the air conditioning unit comprises a housing, the duct forming part of the housing and the housing having a heat storage level, and an ambient air temperature sensor being configured to output an ambient air temperature, and calculating a second heating level comprises:

calculating the housing heat storage level based on the mass flow rate and the ambient air temperature;
calculating an estimated second heater power level based on the second heater power level and the housing heat storage level; and
calculating the second heating level based on the estimated second heater power level.

23. A method according to 22, wherein calculating the estimated second heater power level comprises summing the estimated second heater power level and the housing heat storage level.

24. A method according to 22 or 23, wherein calculating a second heating level comprises:

calculating a second effective heater power level based on the estimated second heater power level and the mass flow rate; and
using the second effective heater power level as the second heating level.

25. A method according to 24, wherein calculating the second effective heater power level comprises applying a low pass filter with a variable averaging period to the estimated second heater power level, the variable averaging period being set in dependence on the mass flow rate.

26. A method according to 25, wherein the variable averaging period is set in dependence on a mapping table of mass flow rate to averaging period.

27. A method according to any of 18 to 26, wherein calculating the estimated evaporator operating temperature comprises:

calculating a first derived evaporator operating temperature based on the first discharge temperature, the first heating level, and the mass flow rate;
calculating a second derived evaporator operating temperature based on the second discharge temperature, the second heating level, and the mass flow rate; and
calculating the estimated evaporator operating temperature by taking an average of the first derived evaporator operating temperature and the second derived evaporator operating temperature.

28. A method according to 27, wherein calculating a first derived evaporator operating temperature is based on half the mass flow rate; and calculating a second derived evaporator operating temperature is based on half the mass flow rate.

29. A method according to any of 1 to 28, wherein the method is performed by an air conditioning controller.

30. An air conditioning system for a vehicle, the air conditioning system comprising:

a duct;
a blower unit being configured to generate an airflow along the duct and to generate the airflow at a variable blower speed;
an evaporator located in the duct;
a first heater located in the duct;
a first discharge temperature sensor being configured to output a first discharge temperature sensed from the airflow in the duct located after the evaporator and first heater; and
an air conditioning controller configured to:

calculate a mass flow rate based on the blower speed of the blower unit;
calculate a first heating level of the air conditioning system based on at least one first heater parameter associated with the first heater; and
estimate the evaporator temperature based on the first discharge temperature, the first heating level, and the mass flow rate.

**Claims**

1. A method for controlling an air conditioning system of a vehicle, the air conditioning system comprising a blower unit, a duct, an evaporator, a first heater and a first discharge temperature sensor, the evaporator and the first heater being located in the duct, the blower unit being configured to generate an airflow along the duct and to generate the airflow at a variable blower speed, the first discharge temperature sensor being configured to output a first discharge temperature sensed from the airflow in the duct located after the evaporator and first heater, the method comprising:

   calculating a mass flow rate based on the blower speed of the blower unit;
   calculating a first heating level of the air conditioning system based on at least one first heater parameter associated with the first heater; and
   calculating an estimated evaporator operating temperature of the evaporator based on the first discharge temperature, the first heating level, and the mass flow rate.

2. A method according to claim 1, wherein the airflow has a specific heat capacity and the method comprises calculating the estimated evaporator operating temperature based on the specific heat capacity.

3. A method according to claim 1 or 2, wherein the air conditioning system comprises a compressor, the compressor being connected to the evaporator to drive the evaporator towards a target evaporator operating temperature; and the method comprises controlling the compressor to drive the evaporator towards the target evaporator operating temperature based on the estimated evaporator operating temperature.

4. A method according to claim 3, wherein the air conditioning system comprises an evaporator temperature sensor configured to output an evaporator operating temperature, and the method comprises: comparing the difference between the evaporator operating temperature and the estimated evaporator operating temperature to a fault threshold; determining a fault with the evaporator temperature sensor if the difference is above the fault threshold; controlling the compressor to drive the evaporator towards the target evaporator operating temperature based on the evaporator operating temperature whilst the difference is below the fault threshold; and controlling the compressor to drive the evaporator towards the target evaporator operating temperature based on the estimated evaporator operating temperature whilst the difference is above the fault threshold.

5. A method according to any preceding claim, wherein calculating the mass flow rate based on the blower speed comprises: converting the blower speed to a blower volumetric flow; and calculating the mass flow rate based on the blower volumetric flow and an air density for the airflow; and optionally the method comprises calculating the air density for the airflow based on the first discharge temperature.

6. A method according to claim 5, wherein the air conditioning system comprises a distribution system, the distribution system comprising at least one distribution flap for controlling the airflow through the air conditioning system, and the method comprises calculating the mass flow rate based on configuration of the distribution flap(s).

7. A method according to any preceding claim, wherein the at least one first heater parameter is a first heater power level; and the air conditioning unit comprises a housing, the duct forming part of the housing and the housing having a heat storage level, and an ambient air temperature sensor being configured to output an ambient air temperature, and calculating a first heating level comprises:

   calculating the housing heat storage level based on the mass flow rate and the ambient air temperature;
   calculating an estimated first heater power level based on the first heater power level and the housing heat storage level; and
   calculating the first heating level based on the estimated first heater power level.

8. A method according to claim 7, wherein calculating the housing heat storage level comprises calculating the housing heat storage level using the mass flow rate and the ambient air temperature as inputs to a heat transfer model of the housing; calculating the estimated first heater power level comprises summing the estimated first heater power level and the housing heat storage level; and calculating a first heating level comprises:

   calculating a first effective heater power level based on the estimated first heater power level and the mass flow rate; and
   using the first effective heater power level as the first heating level.

9. A method according to claim 8, wherein calculating the first effective heater power level comprises applying a low pass filter with a variable averaging period to the estimated first heater power level, the variable averaging period being set in dependence on the mass flow rate; wherein the variable averaging period is set in dependence on a mapping table of mass flow rate to averaging period.

10. A method according to any preceding claim, wherein the air conditioning system comprises an air mix temperature flap, the air mix temperature flap is configured to move between an open position and a closed position and in the open position the airflow is able to pass through the first heater and in the closed position the airflow is unable to pass through the first heater so that the air mix temperature flap position controls heating of the airflow, and the at least one first heating parameter is the air mix temperature flap position, and the method comprises: calculating the first heating level based on the air mix temperature flap position.

11. A method according to any preceding claim as dependent on claim 5, wherein the air conditioning system comprises a second heater, the duct diverges into a first channel and a second channel after the evaporator, the first heater is located in the first channel and the second heater is located in the second channel, the air conditioning system further comprises a second discharge temperature sensor, the second discharge temperature sensor being configured to output a second discharge temperature sensed from the airflow in the second channel after the evaporator and second heater, the first discharge temperature sensor being configured to output the first discharge temperature sensed from the airflow in the first channel after the evaporator and first heater, and the method comprises:

    calculating a second heating level of the air conditioning system based on at least one second heater parameter associated with the second heater; and
    calculating the estimated evaporator operating temperature based on the first discharge temperature, the first heating level, the second discharge temperature, the second heating level, and the mass flow rate;
    the method comprises calculating the air density for the airflow based on the second discharge temperature; and
    the method comprises calculating the air density for the airflow based on an average of the first discharge temperature and the second discharge temperature.

12. A method according to claim 11, wherein the at least one second heater parameter is a second heater power level; and the air conditioning unit comprises a housing, the duct forming part of the housing and the housing having a heat storage level, and an ambient air temperature sensor being configured to output an ambient air temperature, and calculating a second heating level comprises:

calculating the housing heat storage level based on the mass flow rate and the ambient air temperature;
calculating an estimated second heater power level based on the second heater power level and the housing heat storage level; and
calculating the second heating level based on the estimated second heater power level.

13. A method according to claim 12, wherein calculating the estimated second heater power level comprises summing the estimated second heater power level and the housing heat storage level; and calculating a second heating level comprises:

    calculating a second effective heater power level based on the estimated second heater power level and the mass flow rate; and
    using the second effective heater power level as the second heating level;
    wherein calculating the second effective heater power level comprises applying a low pass filter with a variable averaging period to the estimated second heater power level, the variable averaging period being set in dependence on the mass flow rate; wherein the variable averaging period is set in dependence on a mapping table of mass flow rate to averaging period.

14. A method according to any of claims 11 to 13, wherein calculating the estimated evaporator operating temperature comprises:

    calculating a first derived evaporator operating temperature based on the first discharge temperature, the first heating level, and the mass flow rate;
    calculating a second derived evaporator operating temperature based on the second discharge temperature, the second heating level, and the mass flow rate; and
    calculating the estimated evaporator operating temperature by taking an average of the first derived evaporator operating temperature and the second derived evaporator operating temperature;
    wherein optionally calculating a first derived evaporator operating temperature is based on half the mass flow rate; and calculating a second derived evaporator operating temperature is based on half the mass flow rate.

15. An air conditioning system for a vehicle, the air conditioning system comprising:

    a duct;
    a blower unit being configured to generate an airflow along the duct and to generate the airflow at a variable blower speed;
an evaporator located in the duct;
a first heater located in the duct;
a first discharge temperature sensor being configured to output a first discharge temperature sensed from the airflow in the duct located after the evaporator and first heater; and
an air conditioning controller configured to:

> calculate a mass flow rate based on the blower speed of the blower unit;
> calculate a first heating level of the air conditioning system based on at least one first heater parameter associated with the first heater; and
> estimate the evaporator temperature based on the first discharge temperature, the first heating level, and the mass flow rate.

FIG. 1

*FIG. 2*

*FIG. 3*

FIG. 4

Europäisches
Patentamt

European
Patent Office

Office européen
des brevets

# EUROPEAN SEARCH REPORT

Application Number

EP 24 20 8933

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2022/048364 A1 (TAKASE KOHEI [JP]) 17 February 2022 (2022-02-17) * paragraphs [0030] - [0121]; figures 1-10 * | 1-15 | INV. B60H1/00 ADD. B60H1/32 |
| A | US 6 035 653 A (ITOH SATOSHI [JP] ET AL) 14 March 2000 (2000-03-14) * column 3, line 6 - column 10, line 40; figures 1-9 * | 1-15 | |
| A | US 2007/277544 A1 (HONDA KATSUHIKO [JP] ET AL) 6 December 2007 (2007-12-06) * paragraphs [0031] - [0149]; figures 1-11 * | 1-15 | |

TECHNICAL FIELDS
SEARCHED (IPC)

B60H

The present search report has been drawn up for all claims

| Place of search | Date of completion of the search | Examiner |
|---|---|---|
| Munich | 17 March 2025 | Flori, Massimiliano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 24 20 8933

This annex lists the patent family members relating to the patent documents cited in the above-mentioned European search report.
The members are as contained in the European Patent Office EDP file on
The European Patent Office is in no way liable for these particulars which are merely given for the purpose of information.

17-03-2025

| Patent document cited in search report | | Publication date | Patent family member(s) | | Publication date |
|---|---|---|---|---|---|
| US 2022048364 | A1 | 17-02-2022 | CN | 114074519 A | 22-02-2022 |
| | | | JP | 7359105 B2 | 11-10-2023 |
| | | | JP | 2022032536 A | 25-02-2022 |
| | | | US | 2022048364 A1 | 17-02-2022 |
| US 6035653 | A | 14-03-2000 | JP | 3799732 B2 | 19-07-2006 |
| | | | JP | H10287125 A | 27-10-1998 |
| | | | US | 6035653 A | 14-03-2000 |
| US 2007277544 | A1 | 06-12-2007 | JP | 5012193 B2 | 29-08-2012 |
| | | | JP | 2008013165 A | 24-01-2008 |
| | | | US | 2007277544 A1 | 06-12-2007 |

EPO FORM P0459

For more details about this annex : see Official Journal of the European Patent Office, No. 12/82